Europäisches Patentamt

European Patent Office

Office européen des brevets

(19)

(11) **EP 1 454 438 B1**

(12) **FASCICULE DE BREVET EUROPEEN**

(45) Date de publication et mention
de la délivrance du brevet:
**27.04.2005 Bulletin 2005/17**

(21) Numéro de dépôt: **02799792.3**

(22) Date de dépôt: **06.12.2002**

(51) Int Cl.⁷: $H04B\ 10/17$

(86) Numéro de dépôt international:
**PCT/FR2002/004220**

(87) Numéro de publication internationale:
**WO 2003/049334 (12.06.2003 Gazette 2003/24)**

(54) **PROCEDE DE REDUCTION DE PORTEUSE OPTIQUE DE SIGNAUX CIRCULANT SUR UNE FIBRE OPTIQUE; ET DISPOSITIF DE MISE EN OEUVRE**

VERFAHREN UND VORRICHTUNG ZUR TRÄGERUNTERDRÜCKUNG VON ÜBER EINEM FASER ÜBERTRAGENEN OPTISCHEN SIGNALEN

METHOD FOR REDUCING OPTICAL CARRIER OF SIGNALS CIRCULATING ON AN OPTICAL FIBER, AND DEVICE THEREFOR

(84) Etats contractants désignés:
**DE FR GB IT NL SE**

(30) Priorité: **07.12.2001 FR 0115865**

(43) Date de publication de la demande:
**08.09.2004 Bulletin 2004/37**

(73) Titulaire: **Thales**
**75008 Paris (FR)**

(72) Inventeurs:
• **HUIGNARD, Jean-Pierre, Thales Intellectual Pty.**
**F-94117 Arcueil Cedex (FR)**
• **TONDA-GOLDSTEIN, Sylvie,**
**Thales Intellectual Pty.**
**F-94117 Arcueil Cedex (FR)**

• **DOLFI, Daniel, Thales Intellectual Property**
**F-94117 Arcueil Cedex (FR)**
• **BRIGNON, Arnaud, Thales Intellectual Property**
**F-94117 Arcueil Cedex (FR)**

(74) Mandataire: **Chaverneff, Vladimir et al**
**THALES Intellectual Property,**
**31-33 avenue Aristide Briand**
**94117 Arcueil Cedex (FR)**

(56) Documents cités:
**US-A- 5 781 327**

• **PATENT ABSTRACTS OF JAPAN vol. 2000, no. 06, 22 septembre 2000 (2000-09-22) & JP 2000 091999 A (MATSUSHITA ELECTRIC IND CO LTD), 31 mars 2000 (2000-03-31)**

## Description

La présente invention se rapporte à un procédé de réduction de porteuse optique de signaux circulant sur une fibre optique, et à un dispositif de mise en oeuvre de ce procédé.

Dans les liaisons optoélectroniques, telles que celles utilisées en télécommunications à haut débit, les caractéristiques des composants classiques utilisés imposent de moduler très faiblement la porteuse optique. Il en résulte que le signal transmis par les fibres optiques de ces liaisons est constitué d'une faible partie modulée et d'une composante continue de forte amplitude, cette dernière pouvant être responsable de la saturation de certains composants des liaisons, tels que les photodétecteurs et les amplificateurs optiques.

Une méthode connue de réduction de porteuse optique consiste à filtrer sélectivement l'excès de porteuse optique, mais les différentes techniques de mise en oeuvre de cette méthode (filtrage de Bragg, soustraction de porteuse...) introduisent des distorsions et/ou des instabilités des signaux rapides transportés. D'autres méthodes sont également connues des documents. JP 2000091999 et US 5 781 327.

La présente invention a pour objet un procédé permettant d'augmenter la profondeur de modulation de la porteuse optique d'une liaison optique, sans pour autant provoquer des distorsions et/ou des instabilités des signaux rapides transportés. La présente invention a également pour objet un dispositif de mise en oeuvre de ce procédé, dispositif qui soit simple à réaliser et de faible coût.

Le procédé de l'invention consiste à augmenter la profondeur de modulation d'une onde porteuse optique en réduisant dynamiquement la porteuse par interférence de deux ondes optiques cohérentes dans un milieu laser.

Le dispositif de l'invention comporte une source de faisceaux lumineux cohérents, un séparateur optique délivrant deux faisceaux optiques à partir du faisceau de source, un modulateur électro-optique relié à une des deux sorties du séparateur et dont l'entrée de modulation est couplée à un générateur de signal électrique modulant, et un milieu amplificateur à fibre optique dont une extrémité est reliée à la sortie du modulateur et dont l'autre extrémité est reliée à l'autre sortie du séparateur.

Ce dispositif de réduction de porteuse fait appel au mélange de deux ondes de faisceaux optiques dans un milieu non linéaire et consiste à utiliser la saturation de gain dans l'amplificateur de façon à allier une fonction d'amplification due au gain laser à une fonction non linéaire permettant l'inscription d'un réseau dans l'amplificateur. Ce réseau de gain à l'intérieur de l'amplificateur est généré dans une configuration en réflexion de l'amplificateur : deux faisceaux, à savoir un faisceau dit pompe et un faisceau dit signal, entrent dans l'amplificateur par les faces opposées et se propagent le long de la fibre optique de longueur L. Les interférences des deux faisceaux à l'intérieur de l'amplificateur vont donner naissance à des variations spatiales de l'intensité lumineuse selon l'axe de la fibre et produisent une saturation périodique du gain, qui conduit à la création du réseau. La présence de ce réseau ainsi que l'amplification des deux ondes contrapropagatives par le gain laser permettent de mettre en évidence l'existence d'un terme de couplage entre les deux ondes, qui va avoir pour effet une redistribution d'énergie. Dans le régime « faible signal », cette redistribution énergétique va provoquer une atténuation du faisceau dit signal, qui s'explique par le fait que la partie du faisceau pompe qui se diffracte dans la direction du signal est affectée d'un déphasage de $\pi$, venant se soustraire à l'amplitude du faisceau signal.

La présente invention sera mieux comprise à la lecture de la description détaillée de plusieurs modes de réalisation, pris à titre d'exemples non limitatifs et illustrés par le dessin annexé, sur lequel :

- la figure 1 est un bloc-diagramme montrant les éléments principaux du dispositif de l'invention ;
- la figure 2 est un schéma simplifié de l'amplificateur de la figure 1 ;
- la figure 3 est un schéma de principe illustrant la création d'un réseau de gain, en configuration de réflexion, dans l'amplificateur de la figure 1 ;
- les figures 4A à 4C sont des diagrammes de résultats de simulation montrant l'évolution de l'onde déplétée dans le dispositif de l'invention ; et
- la figure 5 est un schéma simplifié d'un exemple de réalisation du dispositif de l'invention.

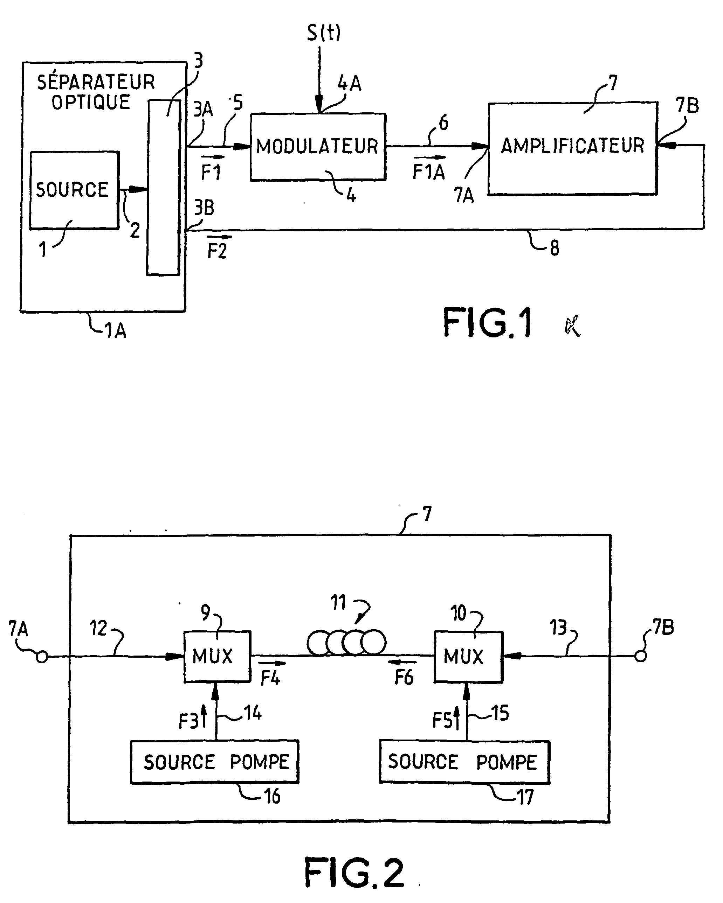

Comme illustré en figure 1, le dispositif de l'invention comprend essentiellement: une source de faisceaux lumineux 1 A comprenant une source de lumière monochromatique 1 reliée par une fibre optique 2 à un séparateur optique 3 à deux sorties 3A et 3B, un modulateur électro-optique 4 par exemple de type Mach-Zehnder dont l'entrée de signal porteur est reliée par une fibre optique 5 à la sortie 3A du séparateur 3 et dont la sortie est reliée par une fibre optique 6 à une entrée 7A d'un amplificateur 7 qui est en configuration de pompage bidirectionnel. L'autre entrée 7B de l'amplificateur 7 est reliée par une fibre optique 8 à la sortie 3B du séparateur 3. La source 1 peut être, par exemple, un laser semiconducteur ou un laser à état solide pompé. Le séparateur 3 est tel qu'il produit sur sa sortie 3A un faisceau F1, ayant une plus faible amplitude que celui F2 produit sur la sortie 3B. Un signal modulant s(t) est appliqué à l'entrée de modulation 4A du modulateur 4. Selon un exemple de réalisation, ce signal s(t) est un signal dont la fréquence peut être comprise entre 1 MHz et 40 GHz. Ce signal s(t) module par exemple en intensité le faisceau F1 provenant de la sortie 3A. Ainsi, le faisceau F1A provenant de la sortie 3A. Ainsi, le faisceau F1A issu du modulateur 4 est représentatif du signal s(t) à transporter. L'amplification par le gain laser de l'amplificateur 7 des deux ondes contrapropagatives portées par les faisceaux F1A et F2 a pour effet une redistribution d'énergie du faisceau optique F1A portant le signal s(t) vers le faisceau F2 issu de 3B. Cette redistribution énergétique provoque la déplétion du faisceau F1A portant le signal optique modulant s(t), mais sans impact sur ce signal qui est à une autre fréquence et d'amplitude très faible (par rapport à l'amplitude de la porteuse), donc sous le seuil de déplétion.

On a représenté en figure 2, le schéma simplifié d'un exemple de réalisation de l'amplificateur 7. Cet amplificateur 7 comporte deux multiplexeurs 9, 10. Les sorties de ces deux multiplexeurs sont reliées entre elles par une fibre optique dopée 11, de longueur L. Une première entrée de ces multiplexeurs 9, 10 et reliée, par une fibre optique 12, 13 respectivement, à l'entrée 7A, 7B respectivement. La deuxième entrée de ces multiplexeurs est reliée, par une fibre optique 14, 15 respectivement à une source laser de pompe 16, 17 respectivement.

L'amplificateur 7 est en configuration de pompage bidirectionnel. La source laser de pompe 16 fournit un faisceau lumineux F3 au multiplexeur 9, et ce faisceau est envoyé dans la fibre optique 11 dans le même sens que le faisceau F1A provenant de l'entrée 7A. Le multiplexeur 9 permet de coupler (ou de séparer) par une des extrémités de la fibre 11 deux ondes sur le même faisceau optique F4 se propageant dans la fibre 11 en direction du multiplexeur 10. L'une de ces deux ondes est à la longueur d'onde du faisceau signal F1A arrivant par l'entrée 7A (cette longueur d'onde est par exemple de 1,55 μm si la fibre 11 est dopée à l'Erbium). L'autre onde est à la longueur d'onde du laser de pompe 16, par exemple à 0,98 μm.

La source laser de pompe 17 fournit un faisceau lumineux F5 au multiplexeur 10, et ce faisceau F5 est envoyé dans la fibre 11 dans le sens opposé au faisceau de signal F1A (venant de l'entrée 7A) ainsi qu'au faisceau F4. Ce multiplexeur 10 permet de coupler ou de séparer par l'autre extrémité de la fibre 11 (extrémité adjacente au multiplexeur 10) le faisceau de pompe F2 venant du séparateur 3 par l'entrée 7B de l'amplificateur 7 (ce faisceau est, par exemple à la longueur d'onde de 1,55 μm pour une fibre 11 dopée à l'Erbium) avec le faisceau lumineux F5 provenant de la source laser de pompe 17 pour donner un faisceau F6 se propageant en sens contraire du faisceau F4. L'interférence de ces deux faisceaux F4 et F6 donne naissance à des variations spatiales de l'intensité lumineuse le long de l'axe de la fibre 11, et en modifie localement le gain laser. Dans les zones sombres des franges d'interférence, l'inversion de population est maintenue, alors qu'elle diminue au niveau des franges brillantes, créant ainsi un réseau spatial de gain. Du fait qu'il s'agit ici de deux ondes cohérentes contrapropagatives, dont l'une (F6) est plus intense que l'autre (F4), l'onde la plus intense donne naissance, par diffraction sur ce réseau de gain à une onde co-propagative de la moins intense, mais affectée d'un déphasage de π, venant ainsi se soustraire à l'amplitude de l'onde la plus faible, ce qui induit une déplétion de cette dernière.

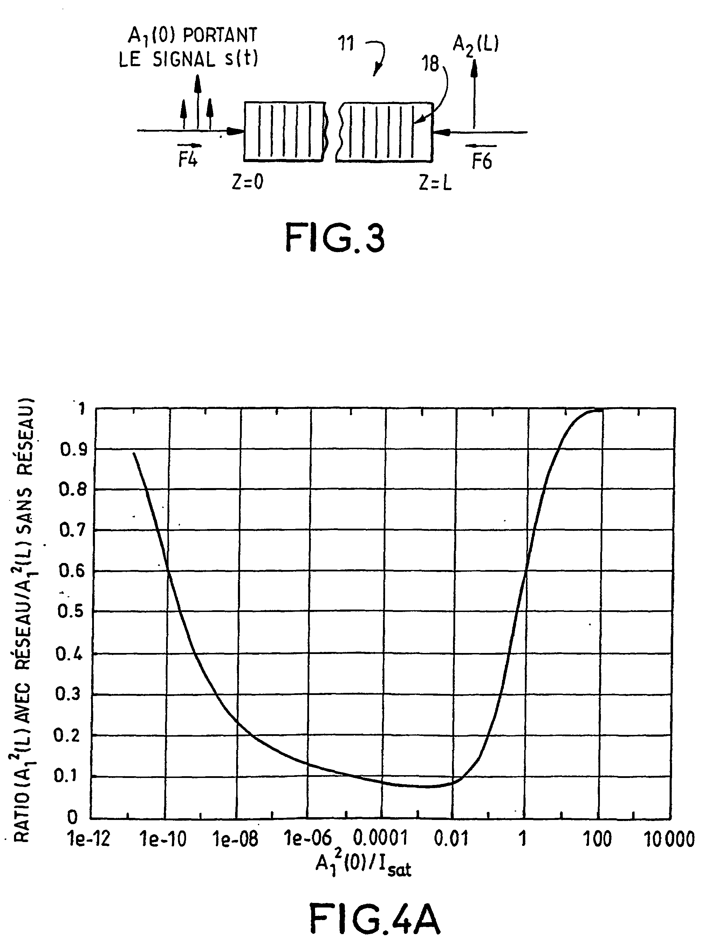

Sur le schéma de la figure 3, on a représenté, de façon simplifiée, la fibre optique 11 dans laquelle est créé le réseau de gain 18 par interférence des faisceaux optiques F4 et F6, d'amplitudes respectives $A_1$ et $A_2$. Ces deux faisceaux proviennent de la même source laser monochromatique 1 et entrent dans le milieu amplificateur 7 par ses extrémités opposées 7A et 7B respectivement. Selon les références : d'une part M.T. Gruneisen, A.L. Gaeta and R.W. Boyd, « Exact theory of pumpwave propagation and its effect on degenerate four-wave mixing in saturable-absorbing media », J. Optic. Soc. Am. B 2, 1117-1121 (1985) et d'autre part : A. Brignon and J.-P. Huignard, « Two-wave mixing in Nd : YAG by gain saturation », Opt. Lett. 18, 1639-1641 (1993), les équations différentielles couplées donnant l'évolution des amplitudes des faisceaux F4 et F6 à l'intérieur du milieu à gain sont :

$$\frac{d|A_1(z)|}{dz} = \gamma_0|A_1| - \gamma_1|A_2|$$

$$\frac{d|A_2(z)|}{dz} = \gamma_0|A_2| - \gamma_1|A_1|$$

avec les $\gamma_n$ données par

$$\gamma_n = \frac{\alpha_0}{2}\frac{1}{D}\left(\frac{1 + I_s - D}{I_M}\right)^n$$

où

$$D(z) = \left[(1+I_s(z))^2 - I_M^2(z)\right]^{1/2}$$

$$I_s(z) = \frac{|A_1(z)|^2 + |A_2(z)|^2}{I_{sat}}$$

$$I_m(z) = 2\frac{|A_1(z)A_2(z)|}{I_{sat}}$$

$I_{sat}$ est définie comme l'intensité nécessaire pour diminuer le coefficient de gain laser d'un facteur 2 et $\alpha_0$ est défini comme le coefficient de gain faible signal obtenu pour $I \ll I_{sat}$, $I_1 = |A_1|^2$ étant l'intensité de l'onde d'amplitude $A_1$ (respectivement $A_2$).

En connaissant les amplitudes des ondes $A_1$(0) et $A_2$(0) à l'entrée du milieu laser, ces équations peuvent être résolues numériquement par la méthode de Runge-Kutta.

On a représenté en figures 4A à 4C l'évolution des intensités, pour une fibre optique dopée à l'Erbium et de longueur L = 20 m, de l'onde déplétée d'amplitude complexe $A_1$ (et portant le signal s(t)) et de l'onde pompe d'amplitude complexe $A_2$, et cela en ayant recours à la résolution numérique selon la méthode Runge-Kutta.

La courbe de la figure 4A permet de déterminer la valeur de l'intensité $A_1{}^2(0)$ à l'entrée de la fibre optique 11 (adjacente au multiplexeur 9), cette intensité correspondant au minimum de déplétion de l'intensité $A_1{}^2(L)$ avec et sans réseau de gain. Les abscisses du graphique sont graduées en $A_1{}^2(0)/I_{sat}$, et les ordonnées sont graduées en rapport de $A_1{}^2(L)$ avec réseau sur $A_1{}^2(L)$ sans réseau.

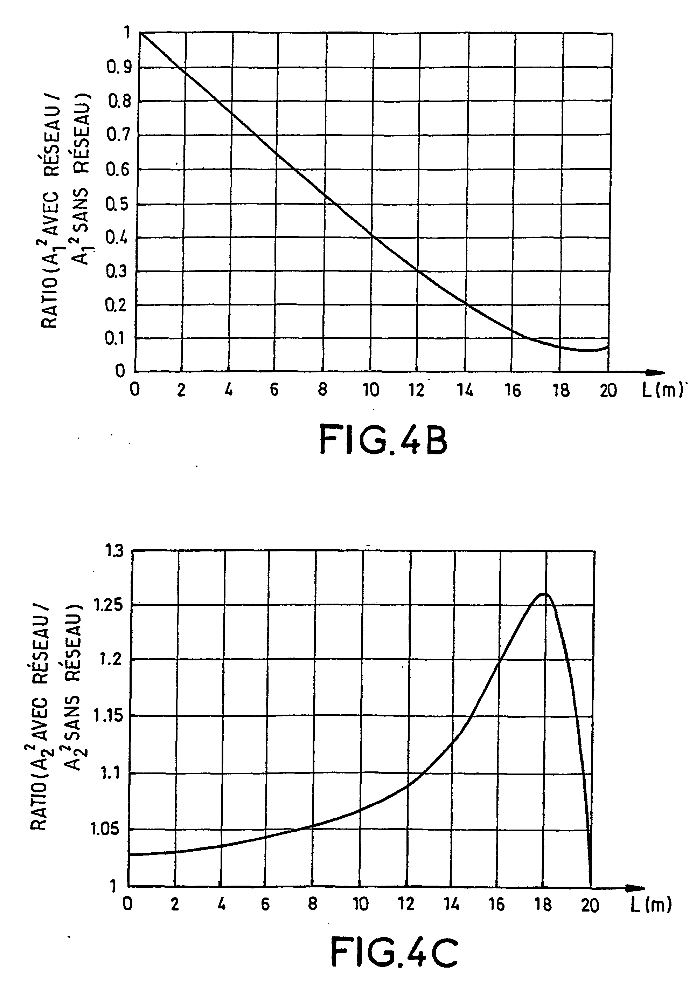

Les courbes des figures 4B et 4C représentent l'évolution de la déplétion de l'onde portant le signal s(t) (et donc le transfert d'énergie vers l'onde pompe venant de l'entrée 7B) tout au long de la fibre 11 de longueur L=20 m. Les courbes 4A à 4C sont relatives à la valeur $A_1{}^2(0)$ telle que déterminée selon la figure 4A, et pour un rapport de 30 entre le carré de l'intensité d'entrée de pompe et le carré de l'intensité de l'onde portant s(t).

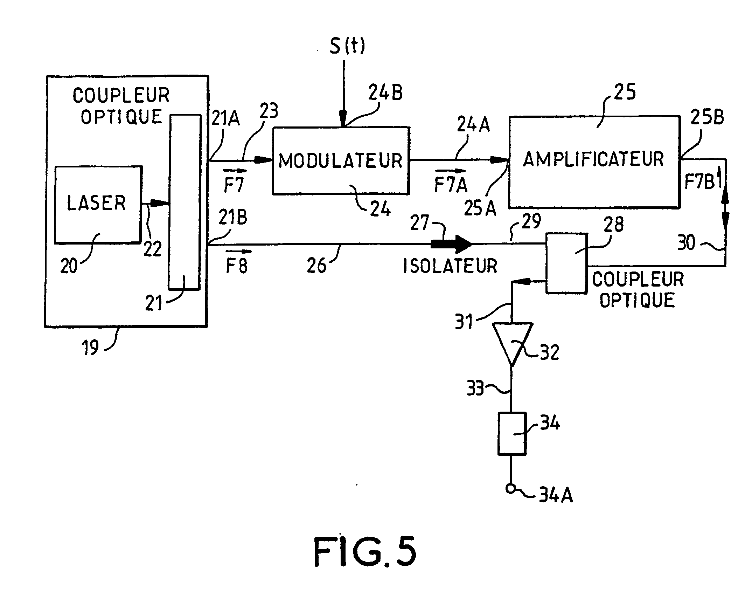

On a représenté en figure 5 le schéma simplifié d'un mode de réalisation du dispositif de l'invention, qui présente les avantages d'être un dispositif « tout fibre optique » adaptatif et de n'utiliser, outre les fibres optiques, que des composants habituels des systèmes de télécommunications à caractéristiques standard, à savoir les amplificateurs optiques, les coupleurs, les lasers de pompe et de source et les modulateurs d'amplitude.

Le dispositif de la figure 5 comprend un dispositif de source lumineuse 19 fournissant deux faisceaux lumineux, et comportant un laser semiconducteur 20 relié à un coupleur optique 21 par une fibre optique monomode 22. Dans l'exemple de réalisation décrit ici, le laser 20 émet à la longueur de 1,55 µm à une puissance moyenne de 10 mW. Le coupleur 21 fournit sur ses deux sorties 21A et 21B des faisceaux optiques F7 et F8 respectivement d'égale intensité. La sortie 21 A est reliée par une fibre optique 23 à un modulateur électro-optique 24 (par exemple au Niobate de Lithium) de type Mach-Zehnder. Ce modulateur 24 reçoit sur son entrée de modulation 24B un signal électrique modulant s(t), qui module avec un faible taux de modulation (par exemple un taux inférieur à 0,1) le faisceau optique F7 venant de 21A. La fréquence du signal s(t) peut être comprise entre quelques Mégahertz et quelques dizaines de Gigahertz. Les pertes d'insertion du modulateur 24 sont, de façon typique, d'environ 6 dB. Le faisceau optique F7A à la sortie du modulateur 24 a alors une amplitude plus faible que celle du faisceau F7 à la sortie 21A du coupleur 21. La sortie du modulateur 24 est reliée par une fibre optique 24A à l'entrée 25A d'un amplificateur 25. Le faisceau optique F8 présent à la sortie 21B du coupleur 21, d'amplitude plus forte que celle du faisceau F7A arrivant à l'entrée 25A de l'amplificateur 25, puisque ce dernier subit les pertes d'insertion du modulateur 24, passe dans une fibre optique 26 qui le mène à un isolateur 27. La longueur de la fibre 26 est déterminée de façon à compenser la différence de trajet optique entre le trajet suivi par le faisceau F7, F7A (entre la sortie 21A et l'entrée 25A) et le trajet suivi par le faisceau F8 (entre la sortie 21B et l'entrée 25 B). L'isolateur 27 est suivi d'un coupleur optique 28 auquel il est relié par une fibre optique 29. Le coupleur 28 est relié par une fibre optique 30 à l'entrée 25B de l'amplificateur 25. La sortie 28A du coupleur 28 est reliée par une fibre optique 31 à un amplificateur optionnel 32. La sortie de l'amplificateur 32 est reliée par une fibre optique 33 à un détecteur optique 34. A la sortie 34A du détecteur 34, on recueille un signal électrique haute fréquence représentant le signal s(t).

Le coupleur 28 est réalisé de façon que le faisceau F8 puisse le traverser en direction de l'entrée 25B, et que le signal déplété dans l'amplificateur 25 et sortant par 25B soit dirigé vers la sortie 28A, l'isolateur 27 empêchant ce signal déplété de passer par la fibre 26. L'amplificateur 25 est ici le même que celui de la figure 2. Le milieu amplificateur est une fibre optique d'une longueur de 20 m, dopée à l'ion Erbium. Les deux lasers de pompe sont des lasers semiconducteurs à la longueur d'onde de 0,98 µm. Les interactions entre les faisceaux propagatifs F7A et contrapropagatif F7B, entrant dans l'amplificateur 25 par les entrées 25A et 25B respectivement, ont pour effet que le faisceau F7A sort déplété de l'amplificateur 25 par la fibre optique 30. Ce faisceau déplété passe par le coupleur 28 et la fibre optique 31, est amplifié optiquement en 32 (si nécessaire) et arrive au détecteur 34. L'amplificateur 32 est un amplificateur optique de type SOA ou EDFA par exemple. Le détecteur 34 est une photodiode rapide à large bande (par exemple de 1 MHz, ou même moins, jusqu'à 40 GHz environ), d'une sensibilité d'environ 1A/W. Ce dispositif de la figure 5 permet, par exemple, de mesurer des taux de modulation allant jusqu'à 100 %.

**Revendications**

1. Procédé de réduction de porteuse optique de signaux circulant sur une fibre optique, consistant à augmenter la profondeur de modulation d'une onde porteuse optique en réduisant dynamiquement la porteuse par interférence de deux ondes optiques cohérentes (F1A-F2, F7A-F7B), **caractérisé par le fait que** l'on utilise une source de faisceaux optiques (1, 20) à deux sorties (3A, 3B ou 21A, 21B), que l'on relie un modulateur électro-optique (4, 24) à l'une de ces sorties, que l'on relie un amplificateur (7) à fibre optique dopée (11) à l'autre sortie et que les faisceaux optiques des deux sorties se propagent en sens contraires dans l'amplificateur optique.

**2.** Procédé selon la revendication 1, **caractérisé par le fait que** l'interférence est produite dans une fibre optique à gain (11).

**3.** Dispositif de réduction de porteuse optique de signaux circulant sur une fibre optique, **caractérisé par le fait qu'**il comporte une source (1A, 19) de faisceaux optiques à deux sorties (3A, 3B, 21A, 21B), produisant sur chacune de ces deux sorties un faisceau lumineux cohérent, un modulateur électro-optique (4, 24) relié à une de ces sorties, et dont l'entrée de modulation (4A, 24B) est couplée à un générateur de signal électrique modulant, et qu'il comporte un milieu amplificateur à fibre optique (7, 11, 25) dont une entrée est reliée à la sortie du modulateur et dont l'autre entrée est reliée à l'autre sortie de la source de faisceaux optiques, les faisceaux optiques des deux sorties se propageant en sens contraires dans le milieu amplificateur.

**4.** Dispositif selon la revendication 3, **caractérisé par le fait que** le milieu amplificateur comporte une fibre optique dopée (11) dont chaque extrémité est reliée à une entrée correspondante du milieu amplificateur (7A, 7B) par un multiplexeur (9, 10), chacun de ces multiplexeurs étant relié par ailleurs à une source pompe (16, 17).

**5.** Dispositif selon la revendication 3 ou 4, **caractérisé par le fait qu'**il comporte un coupleur optique (28) dans la liaison entre l'amplificateur et l'autre sortie de la source de faisceaux optiques.

**6.** Dispositif selon l'une des revendications 3 à 5, **caractérisé par** la fait que la source de faisceaux optiques comporte un laser (1, 20) relié à un coupleur optique (3, 21).

**Patentansprüche**

**1.** Verfahren zur Reduzierung des optischen Trägers von auf einer Lichtleitfaser zirkulierenden Signalen, wobei das Verfahren darin besteht, die Modulationstiefe einer optischen Trägerwelle zu erhöhen, indem die Trägerwelle durch Interferenz von zwei kohärenten optischen Wellen (F1A-F2, F7A-F7B) dynamisch reduziert wird, **dadurch gekennzeichnet, dass** eine Quelle von optischen Strahlen (1, 20) mit zwei Ausgängen (3A, 3B oder 21A, 21B) verwendet wird, dass ein elektrooptischer Modulator (4, 24) mit einem dieser Ausgänge verbunden wird, dass ein Verstärker (7) mit dotierter Lichtleitfaser (11) mit dem anderen Ausgang verbunden wird, und dass die optischen Strahlen der beiden Ausgänge sich im optischen Verstärker in entgegengesetzte Richtungen ausbreiten.

**2.** Verfahren nach Anspruch 1, **dadurch gekennzeichnet, dass** die Interferenz in einer Lichtleitfaser (11) mit Verstärkung erzeugt wird.

**3.** Vorrichtung zur Reduzierung des optischen Trägers von auf einer Lichtleitfaser zirkulierenden Signalen, **dadurch gekennzeichnet, dass** sie eine Quelle (1A, 19) von optischen Strahlen mit zwei Ausgängen (3A, 3B, 21A, 21B), die an jedem dieser beiden Ausgänge einen kohärenten Lichtstrahl erzeugt, und einen elektrooptischen Modulator (4, 24) aufweist, der mit einem dieser Ausgänge verbunden ist und dessen Modulationseingang (4A, 24B) mit einem Generator eines modulierenden elektrischen Signals gekoppelt ist, und dass sie ein Lichtleitfaser-Verstärkungsmedium (7, 11, 25) aufweist, von dem ein Eingang mit dem Ausgang des Modulators und der andere Eingang mit dem Ausgang der Quelle von optischen Strahlen verbunden ist, wobei die optischen Strahlen der beiden Ausgänge sich im Verstärkungsmedium in entgegengesetzte Richtungen ausbreiten.

**4.** Vorrichtung nach Anspruch 3, **dadurch gekennzeichnet, dass** das Verstärkungsmedium eine dotierte Lichtleitfaser (11) enthält, deren beide Enden je über einen Multiplexer (9, 10) mit einem entsprechenden Eingang des Verstärkungsmediums (7A, 7B) verbunden sind, wobei jeder dieser Multiplexer außerdem mit einer Pumpquelle (16, 17) verbunden ist.

**5.** Vorrichtung nach Anspruch 3 oder 4, **dadurch gekennzeichnet, dass** sie einen optischen Koppler (28) in der Verbindung zwischen dem Verstärker und dem anderen Ausgang der Quelle von optischen Strahlen aufweist.

**6.** Vorrichtung nach einem der Ansprüche 3 bis 5, **dadurch gekennzeichnet, dass** die Quelle von optischen Strahlen einen Laser (1, 20) aufweist, der mit einem optischen Koppler (3, 21) verbunden ist.

**Claims**

**1.** Method of optical carrier reduction for signals propagating along an optical fibre, consisting in increasing the depth of modulation of an optical carrier wave by dynamically reducing the carrier by making two coherent optical waves (F1A-F2, F7A-F7B) interfere, **characterized in that** an optical beam source (1, 20) having two outputs (3A, 3B or 21A, 21B) is used, **in that** an electro-optical modulator (4, 24) is connected to one of these outputs, **in that** an amplifier (7) consisting of a doped optical fibre (11) is connected to the other output and **in that** the optical beams from the two outputs propagate in opposite directions in the optical amplifier.

2. Method according to Claim 1, **characterized in that** the interference is produced in a gain optical fibre (11).

3. Optical carrier reduction device for signals propagating in an optical fibre, **characterized in that** it comprises an optical beam source (1A, 19) having two outputs (3A, 3B, 21A, 21B) that produces a coherent light beam on each of these two outputs, an electro-optic modulator (4, 24) connected to one of these outputs and the modulation input (4A, 24B) of which is coupled to a modulating electrical signal generator, and **in that** it includes an optical fibre amplifying medium (7, 11, 25), one input of which is connected to the output of the modulator and the other input of which is connected to the other output of the optical beam source, the optical beams from the two outputs propagating in opposite directions in the amplifying medium.

4. Device according to Claim 3, **characterized in that** the amplifying medium comprises a doped optical fibre (11), each end of which is connected to a corresponding input of the amplifying medium (7A, 7B) via a multiplexer (9, 10), each of these multiplexers being also connected to a pump source (16, 17).

5. Device according to Claim 3 or 4, **characterized in that** it includes an optical coupler (28) in the link between the amplifier and the other output of the optical beam source.

6. Device according to one of Claims 3 to 5, **characterized in that** the optical beam source comprises a laser (1, 20) connected to an optical coupler (3, 21).

FIG.1

FIG.2

$A_1(0)$ PORTANT
LE SIGNAL s(t)

$A_2(L)$

11

18

$\overrightarrow{F4}$

$\overrightarrow{F6}$

$Z=0$

$Z=L$

# FIG.3

# FIG.4A

FIG.4B

FIG.4C

FIG.5